# EUROPÄISCHE PATENTANMELDUNG

(11) **EP 1 420 384 A2**
(43) Veröffentlichungstag der Anmeldung: **19.05.2004**
(21) Anmeldenummer: 03024370.3
(22) Anmeldetag: 24.10.2003
(51) Int. Cl.: G09G 3/00

(54) **System mit einem Bildschirm und einer externen Stromversorgungseinheit**

(30) Priorität: 15.11.2002 DE 10253386
(71) Anmelder: Fujitsu Siemens Computers GmbH, 80807 München (DE)
(72) Erfinder: Soemantri, Albertus, 86316 Friedberg (DE)
(74) Vertreter: Epping Hermann & Fischer

(57) **Zusammenfassung**

Die Erfindung betrifft ein System mit einem Bildschirm, insbesondere Flachbildschirm, und einer externen Stromversorgungseinheit, die mittels eines Steckverbinders mit dem Bildschirm verbindbar ist, zur Versorgung des Bildschirms (1) mit einer Gleichspannung. Erfindungsgemäß ist das System dadurch gekennzeichnet, daß Signalisierungsmittel auf Seiten der Stromversorgungseinheit und Vergleichsmittel auf Seiten des Bildschirms vorgesehen sind zum Vergleich der Betriebsparameter der Stromversorgungseinheit mit Soll-Betriebsparametern sowie Fehlermeldemittel zur Anzeige unzulässiger Abweichungen der signalisierten Betriebsparameter von gespeicherten Betriebsparametern.

## Beschreibung

Die Erfindung betrifft ein System mit einem Bildschirm, insbesondere Flachbildschirm, und einer externen Stromversorgungseinheit, die mittels eines Steckverbinders mit dem Bildschirm verbindbar ist zur Versorgung des Bildschirms mit einer Gleichspannung.

Solche Systeme mit einem Bildschirme und einer externen Stromversorgungseinheit werden insbesondere bei Flachbildschirmen eingesetzt, da diese mit geringen Spannungen von beispielsweise 12 V, 14 V oder 16 V betrieben werden können. Die externen Stromversorgungseinheiten werden einerseits an das Stromnetz mit üblicherweise 230 V oder 110 V angeschlossen, andererseits besteht eine zweiadrige Verbindung zu dem Bildschirm, wobei dieses Kabel über eine Steckverbindung mit dem Bildschirm verbunden ist, so daß die Stromversorgungseinheit und der Bildschirm auf einfache Weise getrennt werden können.

Neben Bildschirmen gibt es auch eine Vielzahl anderer Geräte, die über solche externe Stromversorgungseinheiten mit einer geeigneten Betriebsspannung versorgt werden, beispielsweise Notebooks, externe CD-ROM-Laufwerke, PDAs, Scanner und viele mehr. Der Großteil dieser Geräte wird über Steckverbinder der gleichen Bauart mit dem Netzteil verbunden. Daher ist nicht sichergestellt, daß nur solche Bildschirme und Stromversorgungseinheiten miteinander verwendet werden, die auch zum gemeinsamen Betrieb geeignet sind. Die meisten Stromversorgungseinheiten sehen auch optisch sehr ähnlich aus, so daß es leicht zu Verwechslungen kommt. Bei den genannten Flachbildschirmen kommt es beispielsweise vor, daß ein Bildschirm zusammen mit einer Stromversorgungseinheit ausgeliefert wird und auch bei der Erstinstallation richtig angeschlossen wird.

Beim Austausch des Flachbildschirmes, sei es wegen eines technischen Defekts oder weil der Benutzer den Arbeitsplatz wechselt oder auch einen neuen oder moderneren Flachbildschirm erhält, werden Flachbildschirme mit der alten Stromversorgungseinheit verwendet. Rein mechanisch lassen sich die Stecker der Stromversorgungseinheiten auch problemlos bei dem neuen Gerät einstecken, obwohl eine elektrische Kompatibilität nicht gegeben ist.

Vielen technisch nicht versierten Benutzern ist es nicht bekannt oder bewußt, daß eine Stromversorgungseinheit bestimmte Betriebsparameter hat, die zu den Betriebsparametern des Bildschirms passen müssen, damit ein langfristig fehlerfreier Betrieb gewährleistet ist. Wie eingangs erwähnt sind Flachbildschirme mit 12 V, 14 V und 16 V üblich. Wird eine Stromversorgungseinheit mit einer Nennspannung von 12 V zusammen mit einem Flachbildschirm eingesetzt, der für 16 V ausgelegt ist, so versucht der Bildschirm auch mit dieser niedrigeren Spannung zurecht zu kommen, allerdings ist nicht ein auf Dauer fehlerfreier Betrieb gewährleistet. Andererseits kann es bei dem langfristigen Einsatz einer Stromversorgungseinheit mit einer zu hohen Spannungen zur Zerstörung einzelner Baugruppen des Bildschirms kommen. Da weder der eine noch der andere Fehler sofort erkennbar sind und meistens erst später bemerkt werden, wird von einem technischen Defekt des Bildschirms ausgegangen und dieser reklamiert. Daher liegt es auch im Interesse des Bildschirmherstellers, daß nur zusammengehörige Geräte miteinander verwendet werden.

Ein anderer Betriebsparameter ist die maximale Belastbarkeit der Stromversorgungseinheit. Da unterschiedliche Geräte auch einen unterschiedlichen Strombedarf haben, sind die Stromversorgungseinheiten auf den jeweiligen maximalen Leistungsbedarf ausgelegt. Bei Verwendung einer Stromversorgungseinheit, die keine ausreichende Leistung zur Verfügung stellen kann, wird diese in der Regel überhitzt, was nach einiger Zeit zu einer Zerstörung der Stromversorgungseinheit führt. Auch in diesem Fall wird der Hersteller für einen technischen Fehler verantwortlich gemacht, der nie bestanden hat, sondern lediglich eine falsche Kombination der Geräte vorliegt.

Aber auch in einer dritten Hinsicht ist die Verwendung einer falschen Stromversorgungseinheit problematisch. Bei den verwendeten Stromversorgungseinheiten handelt es sich zum Schaltnetzteile, die mit einer hohen Frequenz arbeiten. Daher sind sie aus Sicht der elektromagnetischen Verträglichkeit (EMV) als potentielle Störquellen zu betrachten. Für solche Störquellen gibt es strenge Vorschriften, wobei deren Einhaltung durch den Hersteller nachgewiesen werden muß. Das Verbindungskabel zwischen der Stromversorgungseinheit und dem Bildschirm wirkt dabei als Antenne. Um eine optimale Dämpfung hochfrequenter Ströme zu erhalten, müssen die Impedanzen bzw. Wellenwiderstände des Netzteils, des Kabels und des Bildschirms optimal aufeinander eingestellt sein. Wird ein Bildschirm mit einer nicht geeigneten Stromversorgungseinheit eingesetzt, werden diese Geräte zu Störquelle und können Störungen an anderen Geräten verursachen.

Aufgabe der Erfindung ist es daher, ein System mit einem Bildschirm und einer externen Stromversorgungseinheit anzugeben, bei dem sichergestellt ist, daß der Bildschirm nur mit einer geeigneten Stromversorgungseinheit betrieben wird.

Diese Aufgabe wird erfindungsgemäß durch ein System der eingangs genannten Art gelöst, das dadurch gekennzeichnet ist, daß die Stromversorgungseinheit Mittel zur Signalisierung von Betriebsparametern aufweist und der Bildschirm Vergleichsmittel zum Vergleich signalisierter Betriebsparameter mit gespeicherten Betriebsparametern und mit den Vergleichsmitteln verbundene Fehlermeldemittel zur Anzeige unzulässiger Abweichungen der signalisierten Betriebsparameter von den gespeicherten Betriebsparametern aufweist.

Der Vorteil des erfindungsgemäßen System besteht darin, daß nicht geeignete Stromversorgungseinheiten auf einfache Weise erkannt werden, wobei hierzu nur wenige zusätzliche Vorrichtungen erforderlich sind, die die Herstellungskosten nicht wesentlich erhöhen. Wenn die Signalisierung über die beiden zur Stromversorgung vorgesehenen Leiter erfolgt, können die gleichen Kabel und Stecker verwendet werden, wie sie bisher eingesetzt werden. Auch bei einer zu geringen durch die Stromversorgungseinheit bereitgestellten Spannung ist diese in der Regel immer ausreichend, um eine Fehlermeldung beispielsweise über einen Lautsprecher oder eine Leuchtdiode auszugeben.

In einer komfortableren Ausgestaltung ist ein sogenanntes On-Screen-Display (OSD) als Fehlermeldemittel vorgesehen, das in der Regel ohnehin zur Einstellung der Betriebsparameter des Bildschirmes wie beispielsweise der Helligkeit oder der Lageneinstellung vorhanden ist.

Bei nahezu allen am Markt erhältlichen Bildschirmen ist ein Mikroprozessor vorgesehen, der die Fehlerauswertung vornehmen kann, ohne daß dazu zusätzliche Hardware erforderlich ist. Es genügt eine Software-Anpassung an die zusätzlichen Aufgaben.

In einer besonders geeigneten Ausgestaltung der Erfindung erfolgt die Signalisierung durch der Gleichspannung überlagerte Wechselspannungssignale, die eine modulierte Information über die Betriebsparameter enthalten. Im Bildschirm ist dabei ein Demodulator vorzusehen zur Demodulierung der Signalisierung. Die Decodierung und weitere Verarbeitung, einschließlich des Vergleichs mit den gespeicherten Betriebsparametern, erfolgt dann über den Mikroprozessor des Bildschirms. Es ist aber auch eine analoge Auswertung signalisierter Parameter möglich.

Besonders günstig ist, wenn die Signalisierung auf einen kurzen Zeitraum nach Inbetriebnahme des Bildschirms mit der Stromversorgungseinheit beschränkt wird und die Entstehung weiterer EMV-Probleme vermieden wird, da die einschlägigen Richtlinien nur für den stationären Betrieb gelten.

In einer anderen vorteilhaften Ausgestaltung besitzt auch der Bildschirm Signalisierungsmittel, die Informationen oder ein Steuersignal an die Stromversorgungseinheit übermitteln können. Beispielsweise können auf diese Weise von dem Bildschirm aus Betriebsparameter der Stromversorgungseinheit eingestellt werden.

Weitere vorteilhafte Ausgestaltungen der Erfindung sind in den Unteransprüchen angegeben.

Die Erfindung wird nachfolgend anhand eines Ausführungsbeispiels näher erläutert. Es zeigt:
- Figur 1: eine Anordnung eines Bildschirms mit einer externen Stromversorgungseinheit,
- Figur 2: eine schematische Darstellung mit den Funktionseinheiten des Bildschirms und der Stromversorgungseinheit und
- Figur 3: ein Signalisierungsdiagramm einer Informationsübertragung von der Stromversorgungseinheit zu dem Bildschirm.

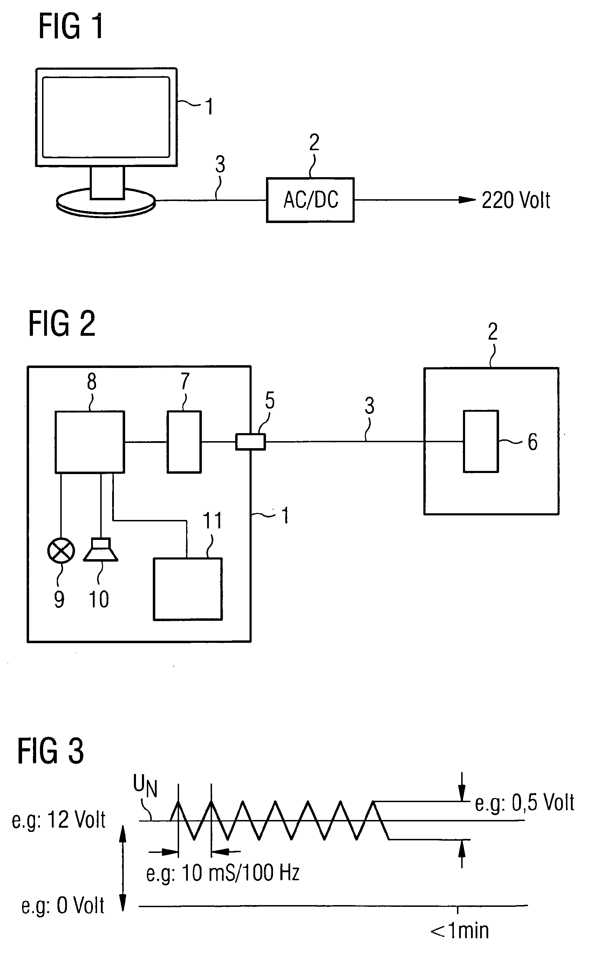

Figur 1 zeigt eine typische Anordnung aus einem Flachbildschirm 1 und einer Stromversorgungseinheit 2, die über ein Kabel 3 miteinander verbunden sind. Die Stromversorgungseinheit ist darüber hinaus über ein weiteres Kabel 4 mit dem Stromnetz verbunden, das beispielsweise eine Spannung von 230 V bereitstellt.

Das Kabel 3 zwischen der Stromversorgungseinheit 2 und dem Flachbildschirm 1 könnte dabei als Antenne wirken, über die Störfrequenzen ausgesendet werden. Das Kabel 3 ist über einen Steckverbinder 5 mit dem Flachbildschirm 1 verbunden.

In der Figur 2 sind die Funktionseinheiten der Anordnung aus Figur 1 dargestellt. Die Stromversorgungseinheit 2 besitzt eine Signalisierungseinheit 6, die nach dem Anschluß der Stromversorgungseinheit 2 an das Stromnetz und der Inbetriebnahme des Flachbildschirms 1 Betriebsparameter an den Flachbildschirm 1 signalisiert, die die Spannung, die Belastbarkeit und den Typ der Stromversorgungseinheit 2 beinhalten. Der Flachbildschirm 1 besitzt einen Demodulator/Decoder 7, der die übermittelten Informationen auskoppelt und aufbereitet. Der Demodulator/Decoder 7 ist mit Vergleichsmitteln 8 verbunden, die die übermittelte Information mit gespeicherten Werten vergleichen, um so festzustellen, ob der Betrieb mit der angeschlossenen Stromversorgungseinheit 2 zulässig ist. Falls die Vergleichsmittel 8 feststellen, daß eine Zulässigkeit nicht gegeben ist, geben sie über Fehlermeldemittel 9, 10 oder 11 ein Signal aus, das den Fehler anzeigt. Geeignete Fehlermeldemittel sind eine Leuchtdiode 9, ein Lautsprecher 10 oder aber auch eine Anzeige auf einer Anzeigeeinheit 11, die normalerweise das von einem angeschlossenen Computer übermittelte und anzuzeigende Bild wiedergibt. Dabei werden vorzugsweise die Mittel eingesetzt, die das sogenannte On-Screen-Display steuern, um Parameter der Bildschirmanzeige einzustellen.

Es ist nicht notwendigerweise erforderlich, daß alle dargestellten Fehlermeldemittel 9, 10 und 11 vorgesehen werden. Es ist aber auf jeden Fall von Vorteil, wenn eines der Fehlermeldemittel dazu geeignet ist, auch dann einen Fehler zu melden, wenn die zur Verfügung gestellte Betriebsspannung nicht ausreicht, um die Anzeigeeinheit 11 zu betreiben.

Bei einer wesentlich zu hohen bereitgestellten Spannung kann es erforderlich sein, aus Sicherheitsgründen zur Vermeidung einer Beschädigung der Anzeigeeinheit 11 diese abzuschalten, während eine Leuchtdiode 9 oder ein Lautsprecher 10 problemlos auch mit der überhöhten Spannung betrieben werden können. Bei Verwendung einer Leuchtdiode 9 könnte beispielsweise vorgesehen werden, daß durch eine immer höhere Blinkfrequenz ein Anwender auf das Vorliegen des Fehlers aufmerksam gemacht wird.

Insbesondere im Fall einer zu hohen Spannung kann eine Kombination mit konventionellen Spannungsüberwachungsmitteln erfolgen, die ohne Einbeziehung des Mikroprozessors funktionieren und die die Leuchtdiode oder den Lautsprecher direkt ansteuern können.
In der Figur 2 ist nicht dargestellt, wie eine Signalisierung in die umgekehrte Richtung erfolgen könnte. Dazu wäre eine Signalisierungsvorrichtung auf Seiten des Flachbildschirms 1 notwendig, die eine Information über die gleiche Leitung überträgt wie die Signalisierung von der Stromversorgungseinheit 2 zum Flachbildschirm 1. Dazu könnte beispielsweise eine andere Frequenz vorgesehen werden, so daß sich die erste und die zweite Frequenz überlagern und von der Stromversorgungseinheit 2 bzw. dem Flachbildschirm 1 diejenige Frequenz ausgefiltert wird, die die für sie bestimmte Information beinhaltet.

In der Figur 3 ist ein Signalisierungsdiagramm dargestellt, wie es am Anfang des Betriebs ablaufen kann. Im vorliegenden Fall ist angenommen, daß die von der Stromversorgungseinheit 2 gelieferte Spannung U_{N} 12 V beträgt. Dieser ist eine Wechselspannung überlagert, die die modulierte Information enthält, die übertragen werden soll. Die dargestellte Sägezahnspannung, es könnte sich auch um eine Sinusspannung oder um eine Rechteckspannung handeln, besitzt eine Amplitude von 0,5-1,2 V. Der eigentliche Betrieb des Bildschirms ist dadurch nicht beeinträchtigt. Die Signalisierung erfolgt beispielsweise in der ersten Sekunden des Betriebs. Das Vorliegen der überlagerten Wechselspannung bedeutet dabei beispielsweise eine logische 1, während das Ausbleiben einer überlagerten Wechselspannung eine logische 0 bedeutet. Die Information steckt dabei in der übertragenen Bitfolge. Hierbei sind jedoch viele Varianten möglich, die dem Fachmann geläufig sind und im jeweiligen Anwendungsfall ausgewählt werden können. Dabei ist insbesondere eine Zuordnung einer bestimmten Frequenz oder einer bestimmten Amplitude zu einer Information in Betracht zu ziehen.

Die Frequenz der aufmodulierten Wechselspannung beträgt im dargestellten Fall 100 Hz entsprechend einer Periodendauer von 10 msec.

Natürlich muß auch der Fall in Betracht gezogen werden, wenn ein erfindungsgemäßer Bildschirm entgegen den Vorschriften mit einer konventionellen Stromversorgungseinheit betrieben wird. Um auch in diesem Fall einen Fehler anzuzeigen sind die Vergleichsmittel und die Fehlermeldemittel dazu eingerichtet einen Fehler anzuzeigen, wenn bei Inbetriebnahme keine Signalisierung von Betriebsparametern von einer externen Stromversorgungseinheit erfolgt.

### Bezugszeichenliste

- 1: Flachbildschirm
- 2: Stromversorgungseinheit
- 3: Kabel
- 4: Kabel
- 5: Steckverbinder
- 6: Signalisierungsvorrichtung
- 7: Demodulator
- 8: Vergleichsmittel
- 9: Leuchtdiode
- 10: Lautsprecher
- 11: Anzeigeeinheit
- U_{N}: Nennspannung

## Patentansprüche

1. System mit einem Bildschirm, insbesondere Flachbildschirm, und einer externen Stromversorgungseinheit (2), die mittels eines Steckverbinders (5) mit dem Bildschirm (1) verbindbar ist, zur Versorgung des Bildschirms (1) mit einer Gleichspannung,
**dadurch gekennzeichnet, daß**
die Stromversorgungseinheit (2) Signalisierungsmittel (6) zur Signalisierung von Betriebsparametern aufweist und der Bildschirm Vergleichsmittel (8) zum Vergleich der signalisierten Betriebsparameter mit gespeicherten Betriebsparametern und mit den Vergleichsmitteln (8) verbundenen Fehlermeldemitteln (9, 10, 11) zur Anzeige unzulässiger Abweichungen der signalisierten Betriebsparameter von den gespeicherten Betriebsparametern aufweist.

2. System nach Anspruch 1,
**dadurch gekennzeichnet, daß**
die Signalisierung durch der Gleichspannung überlagerte Wechselspannungssignale erfolgt, die eine modulierte Information über die Betriebsparameter enthalten.

3. System nach einem der Ansprüche 1 bis 2,
**dadurch gekennzeichnet, daß**
ein Demodulator (7) vorgesehen ist zur Demodulierung der Signalisierung.

4. System nach einem der Ansprüche 1 bis 3,
**dadurch gekennzeichnet, daß**
die Signalisierung nur bei Inbetriebnahme des Bildschirms (1) und der Stromversorgungseinheit (2) erfolgt, vorzugsweise innerhalb eines Zeitraumes kürzer als eine Minute nach Inbetriebnahme.

5. System nach einem der Ansprüche 1 bis 4,
**dadurch gekennzeichnet, daß**
die Anzeige durch die Fehlermeldemittel (9, 10, 11) akustisch und/oder optisch erfolgt.

6. System nach einem der Ansprüche 1 bis 5,
**dadurch gekennzeichnet, daß**
die Anzeige durch die Fehlermeldemittel (11) durch eine Bildschirmanzeige erfolgt.

7. System nach einem der Ansprüche 1 bis 6,
**dadurch gekennzeichnet, daß**
die signalisierten Betriebsparameter zumindest die Spannung und maximale Belastbarkeit sind.

8. System nach einem der Ansprüche 1 bis 7,
**dadurch gekennzeichnet, daß**
Signalisierungsmittel vorgesehen sind zur Signalisierung von Betriebsparametern vom Bildschirm (1) zur Stromversorgungseinheit (2).

9. System nach Anspruch 8,
**dadurch gekennzeichnet, daß**
durch die Signalisierung an die Stromversorgungseinheit (2) Betriebsparameter der Stromversorgungseinheit einstellbar sind.

10. Bildschirm zum Betrieb in einem System nach einem der Ansprüche 1 bis 9,
**dadurch gekennzeichnet, daß** die Vergleichsmittel und die Fehlermeldemittel dazu eingerichtet sind einen Fehler anzuzeigen, wenn bei Inbetriebnahme keine Signalisierung von Betriebsparametern von einer externen Stromversorgungseinheit erfolgt.
